# EUROPEAN PATENT APPLICATION

(11) **EP 1 643 764 A1**
(43) Date of publication of application: **05.04.2006**
(21) Application number: 05107887.1
(22) Date of filing: 29.08.2005
(51) Int. Cl.: H04N 5/783

(54) **Video reproducing apparatus**

(30) Priority: 29.09.2004 JP 2004285323
(71) Applicant: KABUSHIKI KAISHA TOSHIBA, Tokyo (JP)
(72) Inventor: Yamanaka, Taichiro Toshiba Corporation, Minato-ku Tokyo 105-8001 (JP); Nakagawa, Masaki Toshiba Corporation, Minato-ku Tokyo 105-8001 (JP); Suyuki, Nobuyuki Toshiba Corporation, Minato-ku Tokyo 105-8001 (JP)
(74) Representative: Henkel, Feiler & Hänzel

(57) **Abstract**

To provide an image reproducing apparatus which requires a small amount of memory capacity in reverse reproduction. The apparatus has an analyzing unit (70) for acquiring interrelation between a plurality of items of reference image data to be referred to during decode processing from control data with a stream of encoded data, a buffer unit (20), and a decoding unit (50). An accumulation control unit (60a) uses the interrelation information obtained in the analyzing unit (70) to extract the plurality of items of reference image data from the stream and to temporarily accumulate the same in the buffer unit (20). A decode control unit (60b) sequentially outputs reproduced image data decoded in the decoding unit (50) in reverse time series as a reverse reproduction.

## Description

The present invention reiates to a video reproducing apparatus for reading information from a recording medium and reproducing a video, and particularly to an apparatus in which reverse reproduction processing and its functions are improved.

An apparatus for recording/reproducing a video signal with respect to a recording medium such as optical disk, magnetic disk or video tape has the functions of forward reproduction, still reproduction, reverse reproduction and the like. When the video signal is compressed in MPEG (Moving Picture Experts Group) system, a buffer memory for accumulating decoded data is required in reverse reproduction. Conventionally, the memory capacity therefor has required a significantly large amount of capacity (see Jpn. Pat. Appln. KOKAI Publication No. 2003-244641, for example).

The conventional apparatus and method have assumed that a buffer memory for storing therein several items of completely-decoded image data is used. Therefore, the memory in the conventionai apparatus has required a large amount of memory capacity. Thus, product cost accordingly becomes higher.

An object of the embodiments is to provide an image reproducing apparatus and a method therefor in which a small amount of memory capacity is required in reverse reproduction.

Further, another object of the embodiments is to provide an image reproducing apparatus and a method therefor having a method for securing the memory capacity adapted for a stream-type reproduction signal.

An aspect of the present invention provides an image reproducing apparatus which reproduces encoded data accumulated in a main storage unit and outputs the same in reverse time series, comprising analyzing section for fetching control data with a stream of encoded data and analyzing interrelation between a plurality of items of reference image data to be referred to during decoding to obtain interrelation information, a buffer unit to temporarily accumulate the plurality of items of reference image data, accumulation control section for extracting the plurality of items of reference image data from the stream and temporarily accumulating the same in the buffer unit by using the interrelation information obtained by the analyzing section, and reverse reproducing section for processing the plurality of items of reference image data accumulated in the accumulation control section according to a decoding procedure and outputting the plurality of items of reproduced image data decoded in reverse time series.

This summary of the invention does not necessarily describe all necessary features so that the invention may also be a sub-combination of these described features.

The invention can be more fully understood from the following detailed description when taken in conjunction with the accompanying drawings, in which:
FIG. 1 is an explanatory diagram showing the entire structure of an image reproducing apparatus to which the present invention is applied;
FIG. 2 is a flowchart for explaining an operation example of the apparatus of FIG. 1;
FIG. 3 is an explanatory diagram of a data structure included in control data employed in H.264 standard;
FIG. 4 is an explanatory diagram of an image data list included in control data employed in H.264 standard;
FIG. 5 is an explanatory diagram of an image reference interdependence relationship graph constructed in a local memory by a stream analyzing unit of FIG. 1; and
FIG. 6 is an explanatory diagram showing how object data is constructed in a HD DVD system to which the present invention is applied.

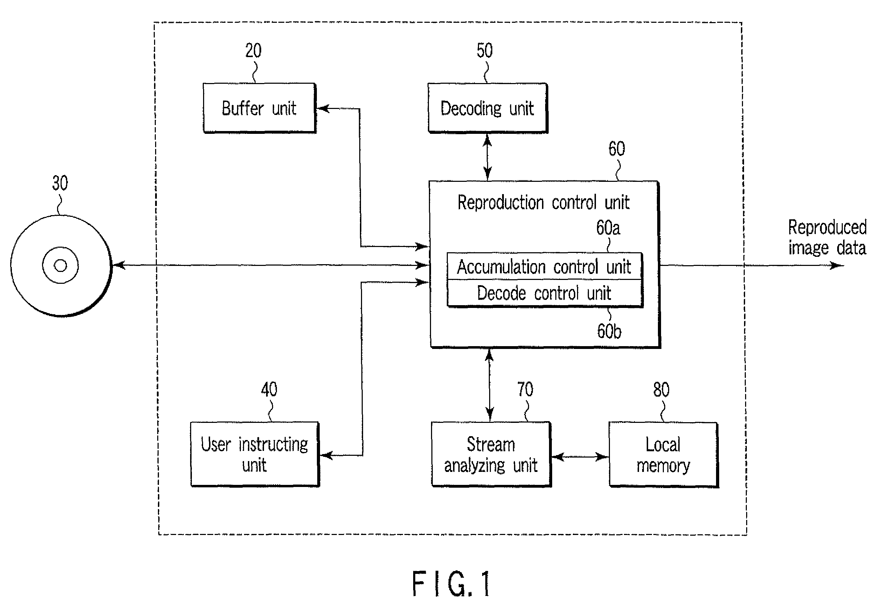

An embodiment according to the present invention will be described below with reference to the drawings. FIG. 1 is a block diagram showing a structure of an image reproducing apparatus according to the embodiment of the present invention. An image reproducing apparatus 10 roughly comprises a buffer unit 20, a user instructing unit 40, a decoding unit 50, a reproduction control unit 60, a stream analyzing unit 70 and a local memory 80.

The buffer unit 20 is directed for accumulating image data input or output with respect to the decoding unit 50 and is made of a fast and large-capacity memory such as DRAM. The image data includes any number of reference images required in an inter-frame prediction processing which is part of the decode process.

The user instructing unit 40 is directed for receiving, when a user instructs reverse reproduction, an operation signal thereof. When the user performs remote operation through a remote control, a light receiving unit therefor is included in the user instructing unit 40.

The decoding unit 50 decodes encoded data accumulated in a main storage unit 30 based on an instruction from the reproduction control unit 60. The decode process includes the inter-frame prediction processing.

The reproduction control unit 60 includes, for example, a CPU (Central processing unit), a gate array and the like. Further, it has an accumulation control unit 60a for extracting several items of reference image data from a stream and temporarily accumulating the same in the buffer unit 20 by using interrelating information obtained from the analyzing unit 70. Furthermore, it has a decode control unit 60b for sequentially outputting reproduced image data decoded in the decoding unit 50 in reverse time series (reverse reproduction). As explained later, when one item of reference image data is referred to by several items of reference image data within the interrelating information, the accumulation control unit 60a changes the number of items of reference image data such that one item of reference image data is referred to by one item of reference image data, thereby securing the capacity of the buffer unit 20.

The reproduction control unit 60 reads a stream from the main storage unit 30 based on an instruction of reverse reproduction from the user instructing unit 40. The reproduction control unit 60 instructs the stream analyzing unit 70 to analyze the read stream. The reproduction control unit 60 instructs the buffer unit 20 to secure the necessary memory capacity based on the analysis result of the stream analyzing unit 70. The reproduction control unit 60 controls for instructing the decoding unit 50 to decode encoded data and to output decoded data obtained by the decoding.

The stream analyzing unit 70 analyzes a stream, and calculates the memory capacity of the buffer unit 20 required for the inter-frame prediction processing. This memory capacity is required for accumulating reference image data required for the inter-frame prediction processing.

The information (interrelating information of several reference images) analyzed in the stream analyzing unit 70 is utilized for various functions. For example, it is utilized for accumulating reference image data in the buffer unit 20, for securing the memory capacity, and the like.

The local memory 80 is utilized for accumulating data with a graph structure. The local memory 80 is made of a fast and large-capacity memory such as DRAM. The data with a graph structure is information analyzed in the stream analyzing unit 70. That is, it is data with a graph structure which is constructed for calculating the memory capacity required in the buffer unit 20.

The present embodiment according to the present invention assumes that the main storage unit 30 is an optical disk and H.264 stream is accumulated therein. The H.264 stream is H.264 standard data, which is taken in high-density (HD) digital versatile disk (DVD) standard.

In the HD DVD standard, there are present an extended image group (denoted as exp_GOP below) corresponding to Group of Picture (GOP) in MPEG standard and, on its upper data hierarchy, an extended video object unit (denoted as exp_VOBU below) corresponding to a video object unit in DVD standard.

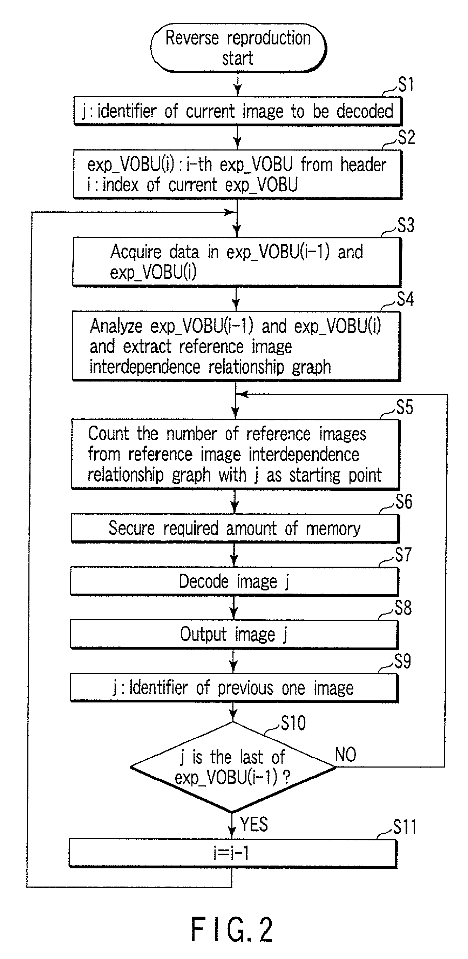

FIG. 2 is a flowchart showing an outline of the image reproduction processing in the present embodiment.

It is assumed that the user instructs the user instructing unit 40 to start reverse reproduction. Then, an identifier of the current image to be decoded is set as "j" and the i-th exp_VOBU from the head is set as exp_VOBU(i) to start decode processing. "i" is an index of the current exp_VOBU (steps S1, S2).

The reproduction control unit 60 reads exp_VOBU including encoded image data, which is requested to be reproduced, and the previous exp_VOBU from the main storage unit 30 (step S3).

It is assumed that an image ID as the identifier of the encoded image data which has been requested to be reproduced is "j". The i-th (i = 0, 1, ...) exp_VOBU including "j" is denoted as exp_VOBU(i).

The reproduction control unit 60 sends the read data of exp_VOBU(i-1) and exp_VOBU(i) to the stream analyzing unit 70, and instructs it to analyze exp_VOBU(i-1) and exp_VOBU(i).

The stream analyzing unit 70 analyzes exp_VOBU(i-1) and exp_VOBU(i) based on the instruction of the reproduction control unit 60, and constructs a reference image interdependence relationship graph (interrelating information) on the local memory 80 (step S4).

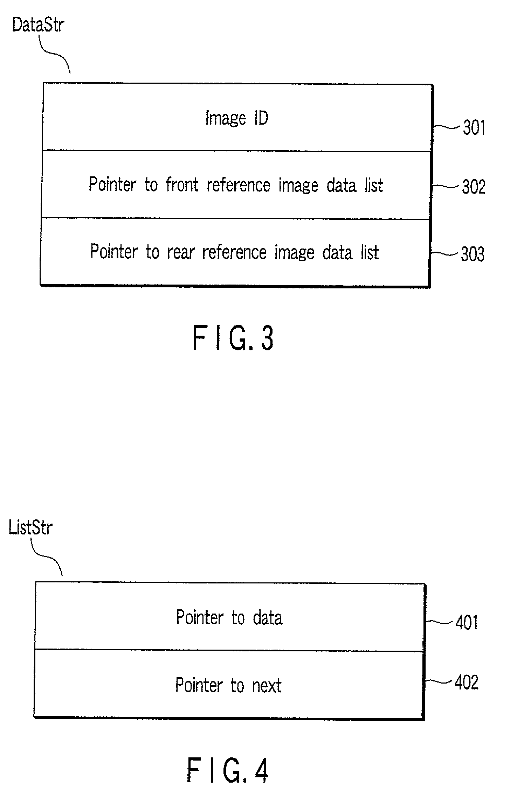

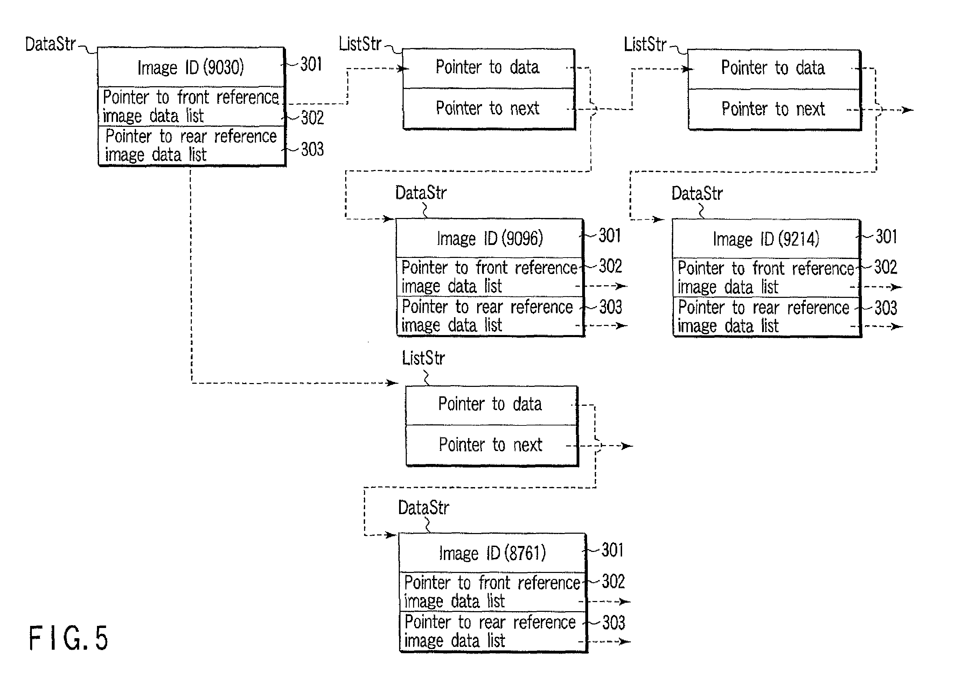

FIGS. 3 and 4 show control data utilized in obtaining the reference image interdependence relationship graph. This control data is included in the header of the video data compressed in H.264 standard. Thus, the reference image interdependence relationship graph as shown in FIG. 5 is constructed on the local memory 80.

A method for generating a reference image interdependence relationship graph will be described. At first, the control data includes a data structure. This data structure (DataStr) is composed of, as shown in FIG. 3, an area 301 for storing therein an image ID, an area 302 for storing therein a pointer to a front reference image data list for storing several items of front reference image data, and an area 303 for storing therein a pointer to a rear reference image data list for storing several items of rear reference image data.

FIG. 4 shows a list structure (ListStr) of the front reference image data list or rear reference image data list. This list structure is composed of an area 401 for storing therein a pointer to data and an area 402 for storing therein a pointer for searching for a next list. This list structure is composed of a unidirectional list structure.

When access is made based on the pointer (head address) to data, the data structure (DataStr) for the next data (structure shown in FIG. 3) is reached. Thus, the list structure (ListStr) of the next front reference image data list or rear reference image data list can be obtained.

FIG. 5 shows how the list structure (ListStr) is developed based on the data structure (DataStr) so that the image ID is sequentially determined and the interrelation of the image data is determined.

Specifically, the reference image interdependence relationship graph is a map which analyzes the relationship between all the reference image data included in exp_VOBU(i-1) and exp_VOBU(i) and the front reference or rear reference image data.

Next, explanation will be made returning to FIG. 2. Assuming that the data structure having "j" as the image ID is a starting point on the image reference interdependence graph, the number of images which is obtained by tracing the front reference image list and the rear reference image list can be counted (step S5).

The overlapped images are not counted to avoid requested storage capacity being increased (that is, several items of reference image data may refer to one item of reference image data in the H.264 compression system).

Thus, the number of reference images required in the decode process based on the inter-frame prediction of the image "j" can be determined. Therefore, the memory capacity for storing the reference image data required in the decode process of the inter-frame prediction of the image "j" in the buffer unit 20 can be calculated by multiplying the number of reference images by the memory capacity required for one item of reference image data.

The stream analyzing unit 70 sends the calculated memory capacity information to the reproduction control unit 60. When the reproduction control unit 60 receives the calculated memory capacity information sent by the stream analyzing unit 70, it instructs the buffer unit 20 to secure the memory capacity (step S6). Further, the reproduction control unit 60 instructs the decoding unit 50 to decode the image "j" (step S7).

The decoded image "j" is output under control of the reproduction control unit 60 (step S8). The reproduction control unit 60 reads the data in the main storage unit 30, and acquires the identifier of the last image but the image "j", which is assumed as a new "j" (step S9).

When the image "j" is included in exp_VOBU(i-1), "i-1" is assumed as a new "i" (step S11), and the processing after step S3 is repeated. When the image "j" is not included in exp_VOBU(i-1), the processing after step S5 is repeated.

The present invention is not limited to the above embodiment. Although it has not been described that the above embodiment has the forward reproducing function, it is natural to have the forward reproducing function. The reference image interdependence graph for the image to be decoded is constructed during forward reproduction, thereby counting the reference images. The number of reference images required in the obtained inter-frame prediction decode process is accumulated in the buffer unit 20 to perform forward reproduction. In the reverse reproduction, the already-obtained number of reference images may be used to calculate the memory capacity of the buffer unit 20 required for decoding or to automatically secure the memory capacity used in forward reproduction. Thus, it is possible to simplify the processing of calculating the memory capacity in the reverse reproduction.

As described above, the present embodiment can make the calculation of the memory capacity required for decoding even faster.

The present embodiment is provided with the stream analyzing unit 70 for calculating the memory capacity for storing the reference images required in the inter-frame prediction decode process in the buffer unit 20 to correspond to any number of reference images during the inter-frame prediction which the H.264 stream has. Further, since the memory area is secured based on the calculated memory capacity, the memory area can be efficiently utilized. The data structure in calculating the memory capacity is held within the same video object unit without being changed so that this data structure can be used to calculate the memory capacity fast.

Further, when the reverse reproduction is instructed by the user, the present embodiment analyzes the stream, calculates the number of reference images required for decoding the image in the target image group, and secures the required memory capacity based thereon by the above units, thereby using the unused memory portion for another purpose, which improves utilization efficiency of the memory.

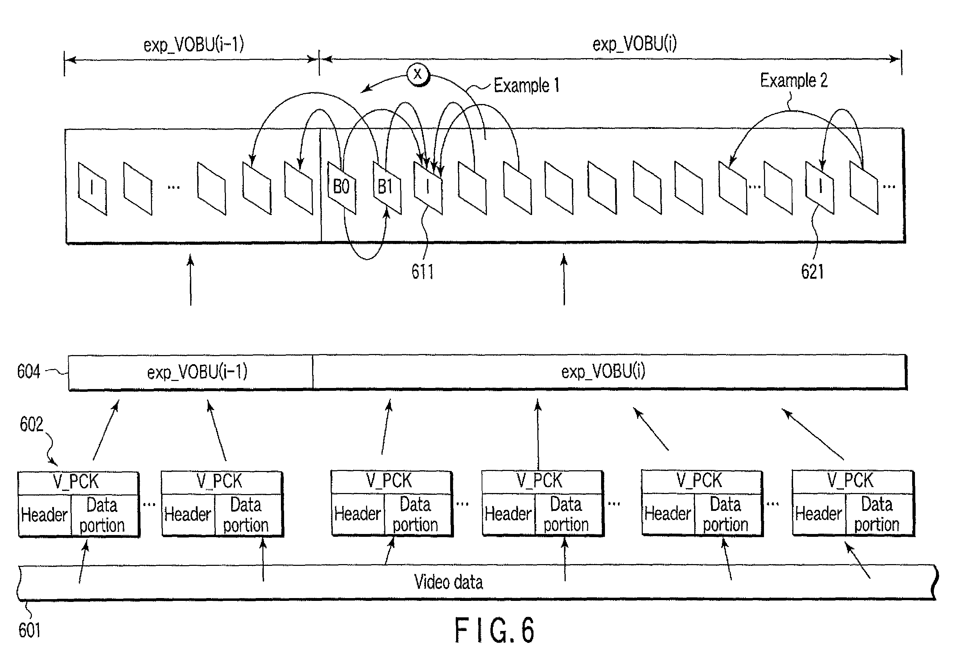

FIG. 6 shows how the object data in the HD DVD system employing H.264 standard, where the present invention is used, is constructed. HD video data 601 is compressed in H.264 standard. The sequence header of the compressed data includes control data to be used for decoding the compressed data. This compressed data is stored in the data potion in a video pack V_PCK. The video pack V_PCK is provided with a header, and this header stores therein management information representing an identification of the video pack and an information attribute of the in-pack data. These video packs V_PCK are stored in exp_VOBU together with other audio pack, sub-video pack (not shown), pack storing therein navigation data, and the like.

A relationship between exp_VOBU and the reference image data as video compression data will be described. FIG. 6 schematically shows the reference image data such as I picture or B picture present in exp_VOBU(i-1) or exp_VOBU(i). In FIG. 6, the rhombic frame represents reference image data and an arrow points toward image data to be referred to.

This HD DVD standard has a rule that in two consecutive exp_VOBU(i-1) and exp_VOBU(i), the reference image data rear than the I picture as a reference (reference image data 611) within the rear exp_VOBU(i-1) does not refer to the reference image data in the front exp_VOBU(i) beyond the I picture (reference image data 611) (example 1). The reference image data rear than the I picture (reference image data 621) may refer to the front reference image data beyond this I picture if it is in the same exp_VOBU (example 2).

Therefore, when there is provided the buffer memory capable of storing therein the reference image data within at lest two exp_VOBU, it is possible to decode the reference image data constructing one exp_VOBU and to obtain reproduced image data. Specifically, the first I picture in one exp_VOBU can be used to decode reference image data rear than the I picture.

According to the explanation based on the example of FIG. 6, at first, the first I picture within exp_VOBU(i) is decoded to obtain reproduced image data (A1). Next, according to the graph explained in FIG. 5, the next image data (A2) is reproduced. At this time, the next reproduced image data (A2) is reproduced using the reproduced image data (A1) of the I picture and the reference image data in exp_VOBU(i) or next VOBU(i+1) (not shown). According to the graph explained in FIG. 5, the next image data (A3) is reproduced. At this time, the reproduced next image data (A3) is reproduced using the reproduced image data (A2) and the reference image data in exp_VOBU(i) or next exp_VOBU(i+1) (not shown). In this manner, the reproduced image data is sequentially obtained. When the reproduced image data to be first output is obtained for reverse reproduction, this reproduced image data is output to the display unit.

Next, the same operation as the above is repeated, and when the target reproduced image data is decoded, this reproduced image data is output to the display unit.

In this manner, the present apparatus employs a method of storing the reference image data in at least two exp_VOBU in the buffer memory, reading the stored reference image data, extracting the reproduced image data, reading again the stored reference image data, extracting the next target reproduced image data, further reading the stored reference image data, and extracting the next target reproduced image data.

Therefore, the present apparatus does not require to accumulate a large number of frames of the reproduced image data, and requires only the buffer memory capacity for accumulating a small amount of reference image data.

In consideration of the above exp_VOBU rule, the buffer memory capacity required for obtaining the reproduced image data can be calculated as follows. The memory capacity required for accumulating all the image data included in one arbitrary exp_VOBU can be calculated by the two following methods.

The HD DVD standard has a rule to conform to main profile level 4.1 of H.264. Hereinafter, a sampling format of video data employs 4:2:0 (component ratio of luminance Y, color difference information Cb, and color difference information Cr) prescribed in H.264 main profile, and calculates it assuming that Y, Cb and Cr require 8 bits in H.264 main profile similarly.

Calculating method 1: Since the combination of horizontal size, vertical size and frame rate, which causes the maximum bit rate permitted in HD DVD standard, is 1920 x 1080 x 29.97, the memory capacity per exp_VOBU is 1920 x 1080 x 29.97 x 8 x 1.5 x 1.2 bits = 106.7 Mbyte. The multiplication of 1.5 times is performed in consideration of the sampling format 4:2:0.

Calculating method 2: H.264 standard prescribes that the maximum number of samples (the number of pixels) per second in the main profile level 4.1 is 62,914,560. Thus, the memory capacity per exp_VOBU is 62,914,560 x 8 x 1.5 x 1.2 bits = 108 Mbyte.

Therefore, since the above memory capacity is previously determined, it is possible to secure the certain amount of memory area for reproduction in the buffer unit 20 and to efficiently use the same.

Although the sampling format 4:2:0 has been used in the above explanation, a parameter representing the sampling format in the stream is present in H.264 standard. Thus, the memory capacity required for each stream can be determined according to the parameter value. However, since this parameter is not present in H.264 standard main profile, it may be previously set as the component ratio 4:2:0 in the current HD DVD or means for calculating and determining the memory capacity required for each stream according to the parameter value may be incorporated in the control unit 60 considering that other component ratio would be supported.

Although the functions during reverse reproduction and forward reproduction have been described in the above explanation, the present invention may be applied to special reproduction such as slow forward reproduction, slow reverse reproduction or skip reproduction. The main storage unit may be exchanged with an optical disk, a magnetic disk, a hard disk, a semiconductor memory or the like.

As described above, the apparatus according to the present invention uses a small memory capacity required during special reproduction such as reverse reproduction.

Although the main storage unit 30 has been described as an optical disk in the above, it is not limited thereto and may be a recording medium in a hard disk apparatus recording therein a broadcast signal. Furthermore, a large capacity memory may be employed.

The present invention is not limited to the above embodiment, and may be implemented by modifying constituents without departing from the spirit in implementation. Further, appropriate combinations of several constituents disclosed in the above embodiment can form various inventions. For example, several constituents may be deleted from all the constituents shown in the embodiment. Further, constituents over different embodiments may be appropriately combined.

## Claims

1. An image reproducing apparatus **characterized by** comprising:
an analyzing unit (70) which acquires interrelation between a plurality of items of reference image data to be referred to during decode processing from control data with a stream of encoded data;
a buffer unit (20) to temporarily accumulate the plurality of items of reference image data;
a decoding unit (50) which processes the plurality of items of reference image data accumulated in the buffer unit (20) according to a decoding procedure;
an accumulation control unit (60a) which extracts the plurality of items of associated reference image data from the stream and temporarily accumulates the same in the buffer unit (20) by using the interrelation information obtained in the analyzing unit (70); and
a decode control unit (60b) which sequentially outputs reproduced image data decoded in the decoding unit (50) in reverse time series as a reverse reproduction.

2. The image reproducing apparatus according to claim 1, **characterized in that** the accumulation control unit (60a) sets a capacity of the buffer unit (20) according to a capacity of the plurality of items of reference image data pointed by the interrelation information.

3. The image reproducing apparatus according to claim 1, **characterized in that** when the accumulation control unit (60a) secures a capacity according to the number of reference images in the buffer unit (20), it resets and secures the capacity of the buffer unit (20) assuming that one item of reference image data is referred to by one item of reference image data within the interrelation information even if one item of reference image data is referred to by a plurality of items of reference image data.

4. The image reproducing apparatus according to claim 1, **characterized in that** the interrelation information includes identification information of image data, a pointer to a front reference image data list of the image data, and a pointer to a rear reference image data list, and
the pointer to the front reference image data list includes a pointer to next interrelation information.

5. The image reproducing apparatus according to claim 1, **characterized in that** the analyzing unit (70) stores the interrelation information in a local memory.

6. The image reproducing apparatus according to claim 1, **characterized in that** the interrelation information is interrelation information of reference image data within at least one video object which is a unit to constitute the stream.

7. The image reproducing apparatus according to claim 1, **characterized in that** the analyzing unit (70) analyzes and stores interrelation information during forward reproduction, and uses the interrelation information also during the reverse reproduction.

8. The image reproducing apparatus according to claim 1, **characterized in that** the encoded stream has a rule that a plurality of frames of video data are compressed and packed in a predetermined format to form a video object unit when a plurality of packs are further collected, and
the accumulation control unit (60a) sequentially sets at least two of the video object units in the buffer unit.

9. An image reproducing method for reproducing image data, having an analyzing unit (70) which acquires interrelation between a plurality of items of reference image data to be referred to during decode processing from control data with a stream of encoded data, a buffer unit (20) to temporarily accumulate the plurality of items of reference image data, a decoding unit (50) which processes the plurality of items of reference image data accumulated in the buffer unit (20) according to a decoding procedure, and a reproduction control unit (60) which controls reproducing operation, the method **characterized by** comprising the steps of:
extracting the plurality of items of reference image data from the stream and temporarily accumulating the same in the buffer unit (20) by using the interrelation information obtained in the analyzing unit (70), and
sequentially outputting reproduced image data decoded in the decoding unit (50) in reverse time series as a reverse reproduction.

10. The image reproducing method according to claim 9, **characterized by** comprising the step of:
when securing a capacity according to the number of reference images in the buffer unit (20), resetting and securing the capacity of the buffer unit (20) assuming that one item of reference image data is referred to by one item of reference image data within the interrelation information even if one item of reference image data is referred to by a plurality of items of reference image data.

11. The image reproducing method according to claim 9, **characterized in that** the interrelation information includes identification information of image data, a pointer to a front reference image data list of the image data, and a pointer to a rear reference image data list, and
the pointer to the front reference image data list includes a pointer to next interrelation information.

12. The image reproducing method according to claim 9, **characterized in that** the encoded stream has a rule that a plurality of frames of video data are compressed and packed in a predetermined format to form a video object unit when a plurality of packs are further collected, and
the accumulation control unit (60a) sequentially sets at least two of the video object units in the buffer unit.
